# EUROPEAN PATENT SPECIFICATION

(11) **EP 2 816 244 B1**
(45) Date of publication and mention of the grant of the patent: **02.11.2016**
(21) Application number: 14170489.0
(22) Date of filing: 29.05.2014
(51) Int. Cl.: F16B 41/00

(54) **Anti-theft locking device for vehicle wheels**
Anti-Diebstahl-Verriegelungsvorrichtung für Fahrzeugräder
Dispositif de verrouillage antivol pour roues de véhicule

(30) Priority: 19.06.2013 IT TO20130509
(43) Date of publication of application: 24.12.2014
(73) Proprietor: Groppo, Lazzaro, 12040 Sanfre' (CN) (IT); Groppo, Matteo, 12040 Sanfre (CN) (IT)
(72) Inventor: Groppo, Lazzaro, 12040 Sanfre' (CN) (IT); Groppo, Matteo, 12040 Sanfre (CN) (IT)
(74) Representative: Robba, Pierpaolo

(56) References cited:
- EP-A2- 2 317 163
- US-B1- 7 445 414

## Description

### Technical Field

The present invention relates to an anti-theft locking device for vehicle wheels.

### Background Art

Anti-theft locking devices for locking vehicle wheels are known in the art. Such devices are made as threated nuts or as bolts having a threaded stem.

In both cases, the locking device cannot usually be rotated by means of a conventional tool such as for instance a fixed spanner wrench, and therefore requires an interface member arranged between the device and the conventional tool. The interface member is therefore provided with a usually hexagonal engagement head for engagement with the conventional tool. The locking device and the interface member are equipped with corresponding, mutually co-operating coupling means so that, when the interface member is coupled on the device, the rotation of the interface member causes corresponding rotation of the anti-theft device.

Still according to the background art, the coupling means can consist of an annular groove, either continuous or interrupted, of various shapes, provided in the device on a surface for the interface member and of a corresponding complementary projection provided on the interface member. The guide portion is provided for facilitating engagement of the interface member on the device and insertion of the coupling means.

Some known devices are provided with a guide portion comprising a rotatable bushing, idly mounted on the device so that it cannot be easily detached from the device itself. The rotatable bushing prevents the guide portion from being gripped and rotated by a conventional tool, for instance by a fixed spanner wrench or a pliers. The device can therefore be rotated only by acting on the interface member, which engages on the interface member engaged on the anti-theft device through the coupling means.

Other known devices are equipped with a guide portion comprising a weakened zone so that, when the guide portion is rotated by gripping it with a conventional tool, said zone becomes detached from the device thus preventing rotation thereof.

Examples of anti-theft devices made as nuts or bolts, especially for vehicle wheels, are described for instance in US 7445414, EP 2317163, IT 1.279.160, US 3.241.408, EP 1369602 and WO 03/081057.

The need for providing an anti-theft locking device for vehicle wheels which offers a high grade of protection against theft attempts while being capable of being manufactured in a cost-convenient way is strongly felt within the field.

The devices with rotatable bushing, though offering a good grade of protection, are expensive, especially because of the costs for the bushing, which will have to be made of a very resistant material, and because of the processing steps required for installing the bushing.

The devices with weakened zone, though being more cost-convenient than those with rotatable bushing, always require precision processing steps in order to confer a suitable level of weakness. Excessive fragility of the weakened zone might indeed lead to the device breaking too early and therefore also during a licit use, whereas an insufficient fragility would allow to unscrew the device also without the aid of the interface member, thus nullifying the anti-theft function.

One of the main objects of the present invention is to overcome these drawbacks of the prior art by providing an anti-theft locking device having a high grade of protection against attempts at illicit use and can be manufactured in a cost-convenient way.

A further object of the invention is to provide an anti-theft locking device that can be made either as a threaded nut or as a bolt provided with a threaded stem.

A not least object of the invention is to provide a device of the aforesaid type that can be produced quickly and is therefore suitable for being manufactured industrially in large quantities.

### Summary of the Invention

These and other objects of the invention are achieved with the anti-theft locking device as claimed in the appended claims.

Advantageously, according to the invention a guide portion is provided capable of being deformed when exposed to outer and/or inner radial forces having intensities lower than those necessary to unlock the device when this is screwed on the hub of a vehicle for locking a wheel. At the end of a theft attempt the guide portion will therefore be substantially squeezed towards the inside and/or torn towards the outside, depending on the direction of application of the force, and therefore will no longer be adapted to be gripped or otherwise used in the attempt to rotate the device.

Advantageously, the guide portion thus obtained can be manufactured in an easy and cost-effective way, thus allowing to produce a simple and inexpensive device.

### Brief Description of the Drawings

Some embodiments of the invention will be described by way of non-limiting examples with reference to the annexed drawings, in which:
- Figure 1 shows the device according to a first embodiment of the invention in partial section along a longitudinal plane, when the device is made as a threaded nut;
- Figure 2 shows the device according to the first embodiment of the invention in partial section along a longitudinal plane, when the device is made as a threaded bolt;
- Figure 3 shows a section along a longitudinal plane of a first variant of the guide portion;
- Figure 4 shows a section along a longitudinal plane of a second variant of the guide portion;
- Figure 5 shows the interface member in partial section along a longitudinal plane;
- Figure 6 shows the device in a second embodiment of the invention in partial section along a longitudinal plane, when the device is made as a threaded bolt and with the interface member in a coupled state;
- Figure 7 shows the device in a third embodiment of the invention in partial section along a longitudinal plane, when the device is made as a threaded nut and with the interface member in a coupled state.

### Description of a Preferred Embodiment

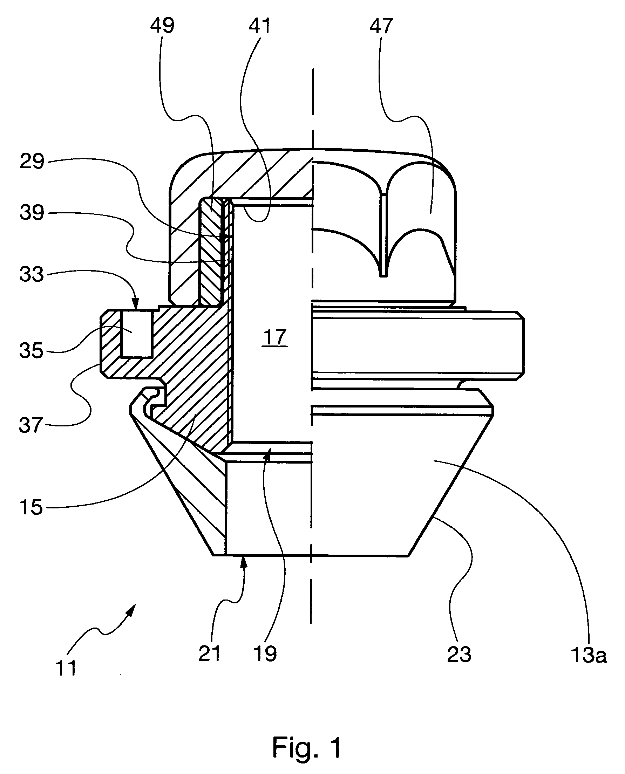

Referring to Figure 1, a first embodiment of the invention is illustrated in which the locking device 11 is made as a threaded nut 13a.

The nut 13a comprises a metal body of cylindrical shape in which an engagement portion 15 is defined capable of being engaged by screwing onto a threaded stem provided in the vehicle hub. In the shown embodiment, the engagement portion 15 consists of a threaded hole 17 axially extending over at least part of the body of the nut 13a. Said threaded hole 17 comprises an opening 19, for instance having a circular cross-section, located at the base 21 of the cylindrical body of the nut 13a, for insertion of the threaded stem. In addition, in this embodiment, said hole 17 passes right through the body of the nut 13a and is therefore open at its both ends.

Said base 21 constitutes the abutment surface for abutment of the nut 13a against the surface of the wheel rim when the device 11 is in its mounted condition. According to the illustrated embodiment, preferably a member 23, usually conical as in the example shown, axially bored and crimped on the outer surface of the nut 13a is associated to the base 21 in order to confer the desired shape to the nut base 21 and avoid damaging the surface of the wheel rim when the device 11 is in its mounted condition.

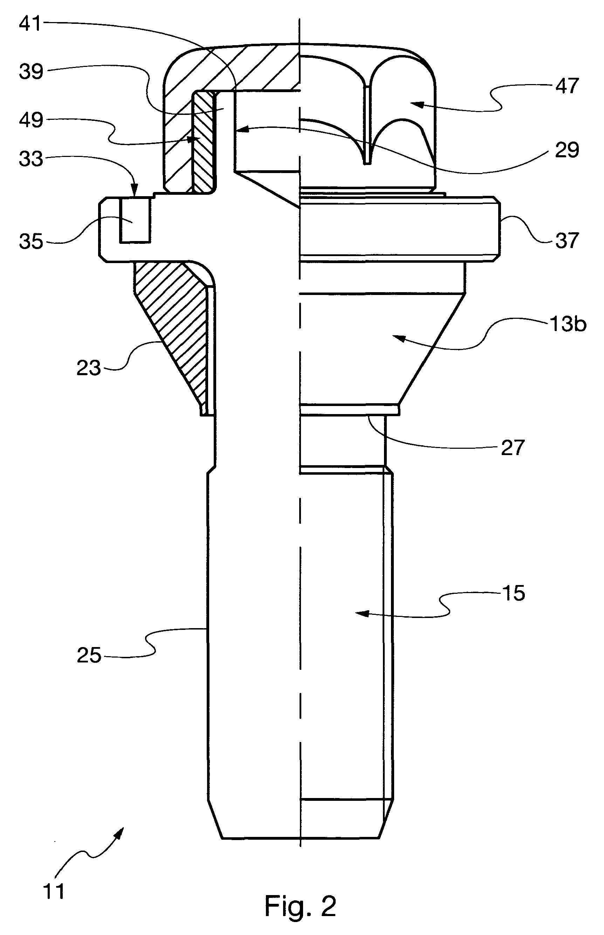

Referring to Figure 2, there is still illustrated said first embodiment of the locking device 11 when made as a bolt 13b. The bolt 13b comprises a metal body having a cylindrical shape in which an engagement portion 15 is defined capable of being engaged by screwing into a threaded hole provided in the hub of a vehicle wheel. In the illustrated embodiment, the engagement portion 15 is made as a threaded stem 25 extending axially along the body of the bolt 13b from the base 27 of the cylindrical body of the bolt 13b. Analogously to the case of the nut 13a, preferably a member 23 axially bored and crimped on the outer surface of the bolt 13b is associated to the base 27 in order to confer the desired shape to the nut base 27 and avoid damaging the surface of the wheel rim when the device 11 is in its mounted condition.

Referring now to both Figures 1 and 2, according to the invention a guide portion 29 for an interface member 31, by means of which the device 11 can be rotated and which will be described below, is provided extending axially in the cylindrical body of the device 11, at the opposite side with respect to the engagement portion 15. The illustrated device 11 further comprises coupling means 33 for said interface member 31, which in turn is provided with complementary coupling means 35. In the illustrated embodiment, the guide portion 29 is surrounded at least partially by said coupling means 33. In the illustrated embodiment said coupling means 33 include an annular groove 35 surrounding, without interruption, the guide portion 29. Said coupling means 33 are further obtained on an annular portion 37 of the device 11 body, which annular portion projects radially outwards relative to the guide portion 29, which in turn extends axially from said portion 37. Said annular portion 37 therefore forms a corresponding abutment plane for abutment of the interface member 31, as will become clearer from the following description, and the annular groove 35 is advantageously obtained on said abutment plane.

Still referring to Figures 1 and 2, according to the invention the guide portion 29 comprises a corresponding cylindrical hollow portion projecting axially from the device body. Said guide portion is capable of being radially deformed under the action of a radial compression force having an intensity less than that required to produce a sufficient torque to rotate the device 11 when this is locked against the wheel of a vehicle with the specified torque. As known, vehicle wheels are fixed to the hub by means of nuts or bolts tightened with the specified torque usually prescribed by the manufacturer. For loosening a nut or a bolt for separating the wheel from the hub, it will therefore be necessary to apply to the nut or bolt a sufficient torque, which will have to be at least equal to the force applied for tightening. Advantageously, according to the invention the guide portion 29 has a side wall 39 such that said wall 39 is radially deformed under a force applied against it, even when this force is lower than that required for producing a tightening torque equivalent to that prescribed for fixing the wheel to the vehicle hub. Preferably, according to the invention the wall 39 can be deformed under the aforesaid conditions, irrespective of whether the force is applied to it from the outside or from the inside of the portion 29.

Still according to the invention, the guide portion 29 is preferably made as a cylindrical sleeve, for instance having a circular cross-section, and is preferably open at its free end 41.

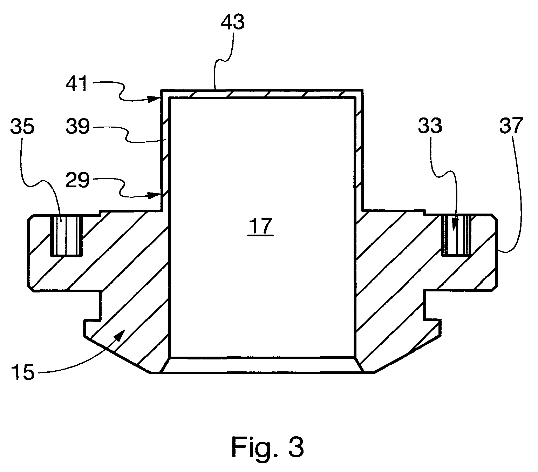

Referring to Figure 3, a first embodiment variant of the guide portion 29 is illustrated, in which said guide portion 29 is closed at its free end 41 by a corresponding transverse partition 43, preferably having a thickness equal to that of the wall 39.

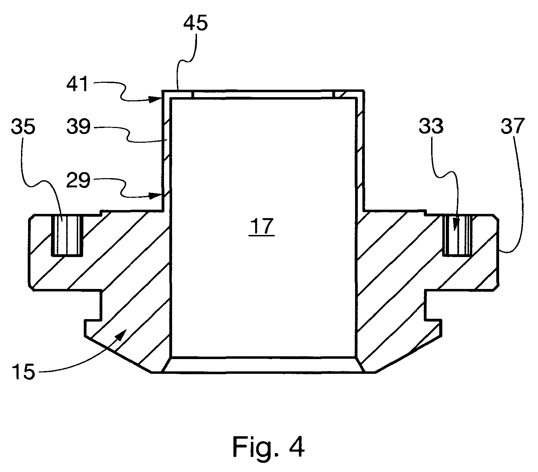

Referring to Figure 4, a second embodiment variant of the guide portion 29 is illustrated, in which said portion is closed only partially at said end 41 by a transverse edge 45 extending radially towards the inside of the guide portion 29.

According to the invention, the wall 39 of the guide portion 29 preferably has a thickness comprised between about 0.5 and 5.00 mm and an axial extension of a length comprised between about 3.0 and 15.0 mm. Still more preferably, the thickness of the wall 39 is about 2.00 mm and the axial extension is about 9.0 mm.

Illicit rotation of the device 11 is therefore prevented by the presence of the deformable guide portion 29, which is deformed under the force applied by a tool used for trying to remove the device.

In a preferred embodiment of the invention, said guide portion 29 is made as a single body with the device 11 of metal material and is therefore made of the same material. However, it is possible to provide a guide portion 29 made of a material different from that of the device 11 and coupled to the body of the device 11 through known means, for instance by welding or gluing.

Still referring to Figures 1 and 2, the device 11 further preferably comprises a removable cap 47 having a mainly protective and aesthetic function, which can be made for example of plastics or metal and is aimed at conferring the desired aesthetic appearance to the device 11. If indeed among the plurality of nuts or bolts, typically four or five, fixing a vehicle wheel to the hub, only one or some of them are of the anti-theft type, it is desirable, for aesthetic reasons, that the outer appearance of all of them is substantially identical. Said cap 47 can be removed during mounting and dismounting of the device 11 for allowing engagement of the interface member 31.

In a preferred embodiment of the invention, between the guide portion 29 and the cap 47 there is further provided a spacer sleeve 49, for instance made of plastics or rubber, having the purpose of guaranteeing the fixing of the cap 47 on the guide portion 29.

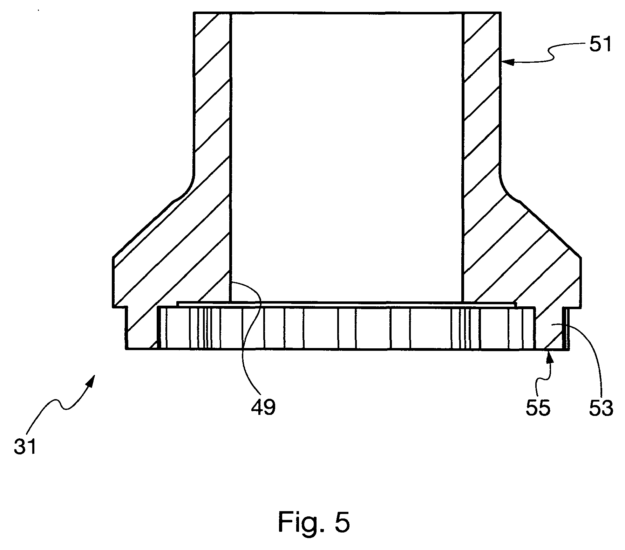

Referring to Figure 5, the interface member 31 comprises a cylindrical hollow body open at one end 49 and provided, at its opposite end, with an engagement portion 51 for engagement with a conventional tool such as a fixed or adjustable spanner wrench or a pliers. In the illustrated embodiment the engagement portion 51 has an hexagonal cross-section and extends axially over a length sufficient for allowing engagement of a complementary hexagonal spanner wrench for rotating the interface member 31. The opening provided at the end 49 comprises coupling means 53 which surround said opening and which, in the illustrated embodiment, comprise an annular projection 55 intended for being engaged into the corresponding annual groove 35 provided in the device 11.

Although in the first embodiment illustrated with reference to Figures 1 e 2, as well as in the corresponding variants illustrated in Figures 3 and 4, the coupling means 33 are arranged outside the guide portion 29, in other embodiments of the device 11 it will be possible to provide for arranging said coupling 33 inside said guide portion 29. In still further embodiments, said coupling means 33, instead of being provided on the abutment plane for abutment of the member 31 defined by the annular portion 37, can be provided around said annular portion 37.

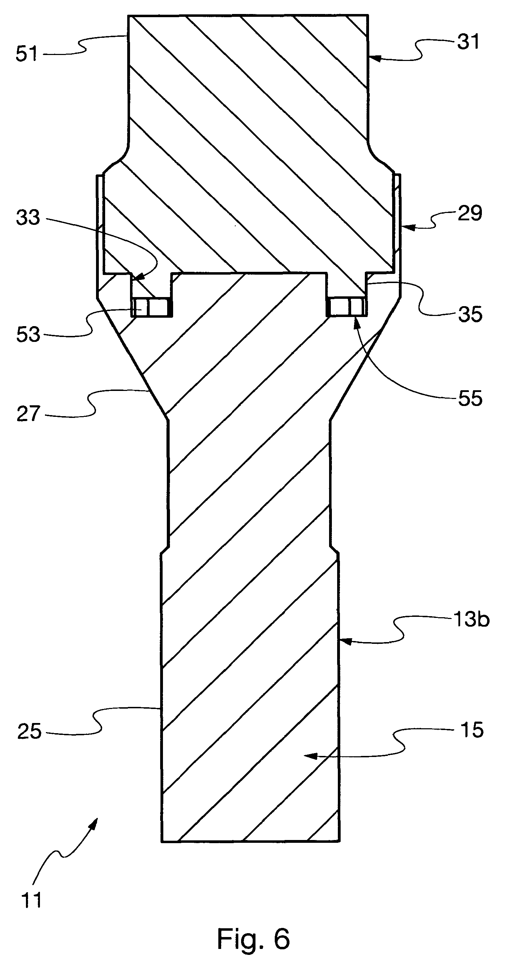

With reference to these further embodiments and referring at first to Figure 6 showing a second embodiment of the invention, the configuration is shown in which said coupling means 33 are provided inside the guide portion 29. It is clear that in accordance with this second embodiment of the invention the guide portion 29 will have to be conveniently open, as in the illustrated example, or at least only partially closed, as illustrated in Figure 4 referring to the second variant of the first embodiment, in order to allow insertion of the interface member 31.

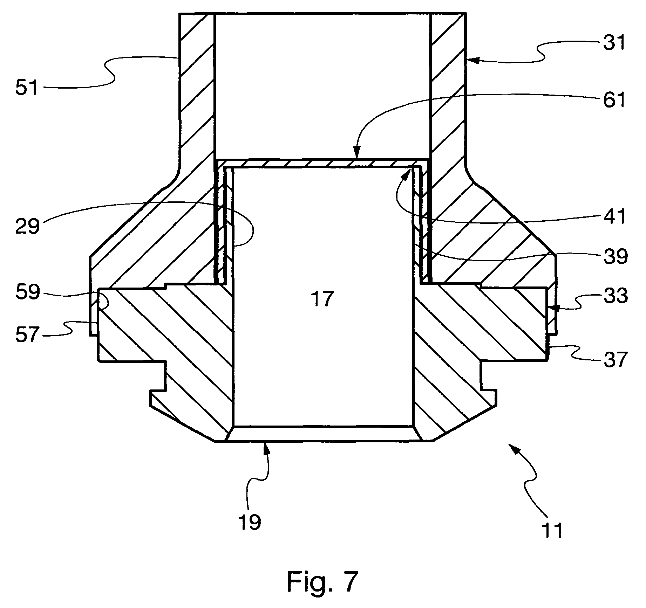

Referring to Figure 7, this, instead, illustrates the third embodiment of the invention, in which said coupling means 33 are provided around the annular portion 37, which therefore comprises a corresponding outer surface 57 of suitable shape. It is clear that in accordance with this third embodiment of the invention the interface member 31 will have to comprise a suitably shaped, complementary inner edge 59 for mating with the surface 38.

Still referring to Figure 7, there is also illustrated an insert 61 fitted around the guide portion 29. In the illustrated embodiment the insert 61 has a cylindrical shape and comprises a base 63 closing the free end 41 of the guide portion 29. It will also be possible to make said insert 61 with such a size that it can be inserted into the portion 29 when the latter is at least partially open. Alternatively, said insert 61 can be made as a sleeve without base 59.

The function of the insert 61 is to prevent said guide portion 29, which according to the invention is conveniently deformable, from being deformed also during normal and licit use of the device 11. The presence of the insert 61, which is associated to the portion 29 so that it can rotate relative to the portion when gripped from the outside with a sufficient force, does not diminish safety of the device, just because a rotation of the insert 61 would not determine rotation of the device 11.

Advantageously, according to the invention, the insert 61 can be mounted on any embodiment or embodiment variant of the invention, on condition that it is in case deprived of the base 59 for passage of the interface member 31, when the means 33 are provided inside the portion 29.

Still according to the invention the coupling means 33 may advantageously comprise continuous grooves, as in the illustrated example, interrupted grooves, variously arranged holes, variously shaped surfaces and so on and, correspondingly, the coupling means 53 will comprise annular projections, interrupted projections, variously arranged pins, complementary shaped surfaces, and so on.

When said coupling means 33 determine provision of a male part and a female part, it is also possible to provide for a reverse solution with respect to the illustrated one, in which the male part, for instance the continuous projection, of the coupling means 33, 53 is provided on the locking device 11 and the female part, for instance the continuous groove, is provided on the interface member 31.

The anti-theft device as described and illustrated is susceptible to numerous variants and modifications falling within the same inventive principle.

## Claims

1. Anti-theft locking device (11) for vehicle wheels, made as a threaded nut (13a) or bolt (13) provided with a threaded stem (25), comprising an engagement portion (15), capable of being screwed onto a threaded stem or into a threaded hole, respectively, provided in the vehicle hub, a guide portion (29) provided on the device (11) body at the opposite side with respect to the engagement portion (15) and coupling means (33) for an interface member (31) which is provided with complementary coupling means (35) and by means of which it is possible to rotate said device (11), **characterized in that** the guide portion (29) has a side wall (39) capable of being radially deformed under the action of a force of intensity less than that required to produce a sufficient torque to rotate the device (11) when this is locked against the wheel of a vehicle with the specified torque.

2. Device according to claim 1, wherein the guide portion (29) comprises a cylindrical sleeve open at the free end (41) of said guide portion (29).

3. Device according to claim 2, wherein the free end of the guide portion is open and provided with an edge (45) radially projecting inwards.

4. Device according to claim 1, wherein the guide portion (29) comprises a cylindrical sleeve closed at the free end (41) of said guide portion (29).

5. Device according to any of the preceding claims, wherein the wall (39) of the guide portion (29) has a thickness comprised between 0.5 and 5.0 mm.

6. Device according to claim 5, wherein the wall (39) of the guide portion (29) has a thickness of 2.0 mm.

7. Device according to any of the preceding claims, wherein a protective cap (47) for the guide portion (29) is provided.

8. Device according to claim 7, wherein a spacer sleeve (49) is arranged interposed between the protective cap (47) and the guide portion (29).

9. Device according to any of the preceding claims, wherein the guide portion (29) extends axially from an annular portion (37) which extends radially outwards from the device (11) body and on which said coupling means (33) are provided.

10. Device according to claim 9, wherein said coupling means (33) comprise an annular groove (35) surrounding the guide portion (29) and capable of receiving a complementary projection (53) provided on the interface member (31).

## Patentansprüche

1. Anti-Diebstahl-Verriegelungsvorrichtung (11) für Fahrzeugräder, die als eine Gewindemutter (13a) oder ein mit einem Gewindeschaft (25) versehener Bolzen (13) ausgelegt ist, umfassend ein Eingriffsteil (15), das an einem Gewindeschaft bzw. in einer Gewindebohrung, der/die an der Nabe des Fahrzeugs vorgesehen ist, angeschraubt werden kann, ein Führungsteil (29), das am Körper der Vorrichtung (11) auf der dem Eingriffsteil (15) entgegengesetzten Seite angeordnet ist, und Kopplungsmittel (33) für ein mit komplementären Kopplungsmitteln (35) versehenes Schnittstellenelement (31), mittels welchem die genannte Vorrichtung (11) gedreht werden kann, **dadurch gekennzeichnet, dass** das Führungsteil (29) eine Seitenwand (39) aufweist, die durch die Wirkung einer Kraft radial verformbar ist, deren Intensität kleiner ist als jene, die zum Erzeugen eines ausreichendes Drehmoments zum Drehen der Vorrichtung (11) notwendig ist, wenn diese mit dem vorgeschriebenen Drehmoment an dem Rad eines Fahrzeugs verriegelt ist.

2. Vorrichtung nach Anspruch 1, wobei das Führungsteil (29) eine zylindrische Buchse umfasst, die an dem freie Ende (41) des genannten Führungsteils (29) offen ist.

3. Vorrichtung nach Anspruch 2, wobei das freie Ende des Führungsteils offen ist und mit einem radial nach innen vorstehenden Rand (45) versehen ist.

4. Vorrichtung nach Anspruch 1, wobei das Führungsteil (29) eine zylindrische Buchse umfasst, die an dem freie Ende (41) des genannten Führungsteils (29) geschlossen ist.

5. Vorrichtung nach irgendeinem der vorhergehenden Ansprüche, wobei die Wand (39) des Führungsteils (29) eine Dicke zwischen 0,5 und 5,0 mm aufweist.

6. Vorrichtung nach Anspruch 5, die Wand (39) des Führungsteils (29) eine Dicke von 2,0 mm aufweist.

7. Vorrichtung nach irgendeinem der vorhergehenden Ansprüche, wobei eine Schutzkappe (47) für das Führungsteil (29) vorgesehen ist.

8. Vorrichtung nach Anspruch 7, wobei eine Distanzhülse (49) zwischen der Schutzkappe (47) und dem Führungsteil (29) zwischengeschaltet ist.

9. Vorrichtung nach irgendeinem der vorhergehenden Ansprüche, wobei das Führungsteil (29) sich axial von einem ringförmigen Teil (37) erstreckt, das sich radial nach außen von dem Körper der Vorrichtung (11) erstreckt und an dem die genannten Kopplungsmittel (33) angeordnet sind.

10. Vorrichtung nach Anspruch 9, wobei die genannten Kopplungsmittel (33) eine ringförmige Nut (35) umfassen, die das Führungsteil (29) umgibt und einen an dem Schnittstellenelement (31) vorgesehenen komplementären Vorsprung (53) aufnehmen kann.

## Revendications

1. Dispositif de verrouillage antivol (11) pour roues de véhicule, réalisé sous forme d'un écrou fileté (13a) ou d'un boulon (13) pourvu d'une tige filetée (25), comprenant une partie d'engagement (15) susceptible d'être vissée sur une tige filetée ou, respectivement, dans un trou fileté prévu(e) dans le moyeu du véhicule, une partie de guidage (29), prévue sur le corps du dispositif (11) sur le côté opposé par rapport à la partie d'engagement (15), et des moyens de couplage (33) pour un élément d'interface (31) qui est pourvu de moyens de couplage complémentaires (35) et au moyen duquel il est possible de faire tourner ledit dispositif (11), **caractérisé en ce que** la partie de guidage (29) comporte une paroi latérale (39) qui est susceptible d'être déformée radialement sous l'action d'une force d'une intensité inférieure à celle requise pour produire un couple suffisant pour faire tourner le dispositif (11) lorsque celui-ci est verrouillé sur la roue d'un véhicule avec le couple spécifié.

2. Dispositif selon la revendication 1, dans lequel la partie de guidage (29) comprend un manchon cylindrique ouvert à l'extrémité libre (41) de ladite partie de guidage (29).

3. Dispositif selon la revendication 2, dans lequel l'extrémité libre de la partie de guidage est ouverte et pourvue d'un bord (45) faisant saillie radialement vers l'intérieur.

4. Dispositif selon la revendication 1, dans lequel la partie de guidage (29) comprend un manchon cylindrique fermé à l'extrémité libre (41) de ladite partie de guidage (29).

5. Dispositif selon l'une quelconque des revendications précédentes, dans lequel la paroi (39) de la partie de guidage (29) a une épaisseur comprise entre 0,5 et 5,0 mm.

6. Dispositif selon la revendication 5, dans lequel la paroi (39) de la partie de guidage (29) a une épaisseur de 2,0 mm.

7. Dispositif selon l'une quelconque des revendications précédentes, dans lequel un chapeau de protection (47) pour la partie de guidage (29) est prévu.

8. Dispositif selon la revendication 7, dans lequel une bague d'espacement (49) est interposée entre le chapeau de protection (47) et la partie de guidage (29).

9. Dispositif selon l'une quelconque des revendications précédentes, dans lequel la partie de guidage (29) s'étend axialement à partir d'une partie annulaire (37) qui s'étend radialement vers l'extérieur à partir du corps du dispositif (11) et sur laquelle lesdits moyens de couplage (33) sont prévus.

10. Dispositif selon la revendication 9, dans lequel lesdits moyens de couplage (33) comprennent une rainure annulaire (35) entourant la partie de guidage (29) et apte à recevoir une saillie complémentaire (53) prévue sur l'élément d'interface (31).
